# FASCICULE DE BREVET EUROPEEN

(11) **EP 2 888 102 B1**
(45) Date de publication et mention de la délivrance du brevet: **19.07.2017**
(21) Numéro de dépôt: 13762180.1
(22) Date de dépôt: 22.08.2013
(51) Int. Cl.: B32B 3/12, B32B 3/28

(54) **FEUILLE D'ÂME DE MATERIAU STRUCTURAL, ÂME ET MATERIAU STRUCTURAL COMPORTANT UNE TELLE FEUILLE**
KERNSCHICHT EINES BAUMATERIALS, KERN UND BAUMATERIAL MIT SOLCHER SCHICHT
CORE SHEET OF STRUCTURAL MATERIAL, CORE AND STRUCTURAL MATERIAL HAVING SUCH A SHEET

(30) Priorité: 24.08.2012 FR 1257976
(43) Date de publication de la demande: 01.07.2015
(73) Titulaire: Brun, Frédéric, 14000 Caen (FR); Chermant, Alexis, 14640 Auberville (FR)
(72) Inventeur: BRUN, Frédéric, 14000 Caen (FR)
(74) Mandataire: Cabinet Plasseraud
(86) Numéro de dépôt international: PCT/FR2013/051958
(87) Numéro de publication internationale: WO 2014/029950

(56) Documents cités:
- WO-A1-03/047848
- WO-A1-2011/011634
- WO-A2-2009/108712
- FR-A1- 2 162 034
- FR-A1- 2 839 995
- US-B1- 6 713 008

## Description

La présente invention est relative à une feuille pour âme de matériau structural, une âme de matériau structural comportant une telle feuille et un matériau structural sandwich comportant une telle âme.

Les matériaux structuraux sandwich sont généralement composés de deux peaux externes solidarisées sur les faces opposées d'une âme. Ladite âme peut être réalisée dans une grande variété de matières constitutives et est faite de telle sorte qu'elle possède une forte résistance structurale à la compression et à la flexion tout en conservant un poids minimal. Ces matériaux structuraux possèdent de nombreuses applications par exemple dans le domaine de l'aéronautique ou de l'automobile.

L'invention se rapporte plus particulièrement à une feuille d'âme de matériau structural sandwich s'étendant sensiblement selon un plan d'extension et présentant une face supérieure et une face inférieure opposées selon une direction d'épaisseur perpendiculaire au plan d'extension, la feuille étant munie d'une pluralité de surfaces supérieures de collage au niveau de sa face supérieure ainsi que d'une pluralité de surfaces inférieures de collage au niveau de sa face inférieure.

Le document US 4,495,237 décrit un exemple d'une telle feuille d'âme de matériau structural sandwich comportant un agencement de pyramides tronquées munies d'arêtes chanfreinées séparées par des canaux vides. Une âme de matériau structural sandwich peut être formée par un empilement en quinconce de deux telles feuilles, l'une étant retournée par rapport à l'autre, de façon à ce que les surfaces de troncature des pyramides de chacune desdites feuilles viennent en contact avec les creux séparant les pyramides tronquées de l'autre feuille.

Les documents WO 2009/108712 A2, WO 2003/047848 A1, WO 2011/011634 A1, FR 2 839 995 A1, FR 2 162 034 A1, US 6 713 008 B1 et US 4 495 237 décrivent d'autres exemples de feuilles d'âmes de matériau structural sandwich. Il peut être souhaitable de réduire encore le poids de telles feuilles d'âmes de tout en conservant de bonnes propriétés mécaniques.

La présente invention a notamment pour but de proposer une feuille d'âme, une structure d'âme et un matériau structural sandwich présentant un poids plus faible ainsi que de meilleures caractéristiques de résistance et constituant une alternative économiquement viable aux solutions connues.

À cet effet, selon l'invention, la feuille d'âme de matériau structural sandwich en question est caractérisée en ce qu'elle comprend un réseau tridimensionnel d'arêtes (séparées par des surfaces de liaisons,
en ce que chaque arête est définie par une paroi profilée non-plane délimitée par
une surface supérieure de collage parmi la pluralité de surfaces supérieures de collage,
une surface inférieure de collage parmi la pluralité de surfaces inférieures de collage, et
deux droites sensiblement parallèles reliant ladite surface supérieure de collage à ladite surface inférieure de collage en suivant une direction d'arête,
et en ce que chaque surface de liaison est délimitée par au moins trois arêtes.

Grâce à ces dispositions, la feuille d'âme de matériau structural selon l'invention possède de bonnes propriétés mécaniques tout en ayant un poids réduit. En effet, chacune des arêtes est définie par une paroi profilée non-plane et possède ainsi une rigidité importante en compression suivant sa direction d'arête. Le réseau des arêtes étant tridimensionnel, la résistance mécanique de la structure est donc importante suivant toutes les directions de l'espace. Une âme de matériau structural et un matériau utilisant lesdites feuilles présentent donc un très bon rapport entre résistance mécanique et poids, ainsi qu'une rigidité importante tant en flexion qu'en compression. Une âme de matériau structural utilisant lesdites feuilles possède de très bonnes propriétés en tant qu'absorbeur d'énergie, par exemple lors de chocs. Une âme de matériau structural utilisant lesdites feuilles possède également un comportement en cisaillement amélioré. Le fait d'utiliser une feuille unique (empilable ou non) permet, notamment pour des âmes dont la masse volumique est inférieure à 100 kg/m^3, l'emploi de tissu pour sa confection du fait d'une épaisseur plus importante ce qui permet de réaliser une âme en matériaux composites.

A titre d'exemple, une feuille de 20 mm d'épaisseur pourra peser 1 kg/m^2 pour une masse volumique finale du matériau de 50 kg/m^3. En plasturgie on pourra utiliser une feuille d'environ 1 mm d'épaisseur avant thermoformage, et pour des composite (le ratio entre la surface développée et la surface projetée étant par exemple inférieur à trois), en considérant une masse volumique moyenne de 1590 kg/m^3 pour du carbone/époxy, l'épaisseur de la feuille pourra être supérieure à 0,2 mm, soit environ deux plis composites pour la réalisation d'une telle feuille.

Dans divers modes de réalisation de la feuille d'âme selon l'invention, on peut éventuellement avoir recours en outre à l'une et/ou à l'autre des dispositions suivantes.

Selon un aspect de l'invention, les surfaces supérieures et inférieures de collages sont réparties périodiquement.

Selon un aspect de l'invention, la pluralité de surfaces supérieures de collage et la pluralité de surfaces inférieures de collages sont agencées en quinconce selon le plan d'extension.

Selon un aspect de l'invention, chaque surface de liaison est délimitée par au moins quatre arêtes, deux surfaces de collage inférieures et deux surfaces de collage supérieures.

Selon un aspect de l'invention, les surfaces de liaison ont un barycentre localisé sensiblement au niveau d'un plan médian parallèle au plan d'extension de la feuille et situé à la moitié d'une distance d'épaisseur séparant les faces supérieure et inférieure, ladite distance étant considérée selon la direction d'épaisseur.

Selon un aspect de l'invention, les surfaces de liaison sont des surfaces minimales.

Selon un aspect de l'invention, les surfaces de liaison sont des surfaces minimales segmentées ou pourvues de rainures.

Selon un aspect de l'invention, les surfaces supérieures et inférieures de collage sont identiques.

Selon un aspect de l'invention, pour au moins une arête, les deux droites parallèles délimitant ladite arête sont non-confondues.

Selon un aspect de l'invention, chaque paroi profilée non-plane d'arêtes est constituée uniquement par des droites reliant ladite surface supérieure de collage la délimitant à ladite surface inférieure de collage la délimitant.

L'invention se rapporte également à une âme de matériau structural sandwich comportant au moins une feuille tel que défini ci-dessus.

L'invention se rapporte également à un matériau structural sandwich comportant une âme tel que ci-dessus.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue en perspective d'une feuille d'âme de matériau structural sandwich selon un premier mode de réalisation.
- la figure 2 est une vue de dessus de la feuille de la figure 1.
- les figures 3a et 3b sont des vues en perspective de feuilles d'âme de matériau structural sandwich selon deux autres modes de réalisation.
- la figure 4 est une vue en perspective d'une feuille d'âme de matériau structural sandwich selon encore un autre mode de réalisation.
- Les figures 5a et 5b correspondent aux coupes VA et VB indiquées sur la figure 4 et illustrent la conformation des parois profilée non-planes des arêtes à différentes positions le long des directions d'arêtes.
- la figure 6 est une vue en perspective d'une feuille d'âme de matériau structural sandwich selon un autre mode de réalisation.
- Les figures 7a et 7b correspondent aux coupes VIIA, et VIIB indiquées sur la figure 6 et illustrent la conformation des parois profilée non-planes des arêtes à différentes positions le long des directions d'arêtes.
- la figure 8a est une vue en perspective d'un matériau structural sandwich selon un mode de réalisation de l'invention.
- la figure 8b est une vue de face du matériau structural sandwich de la figure 8a.

Sur les différentes figures, les mêmes références désignent des éléments identiques ou similaires.

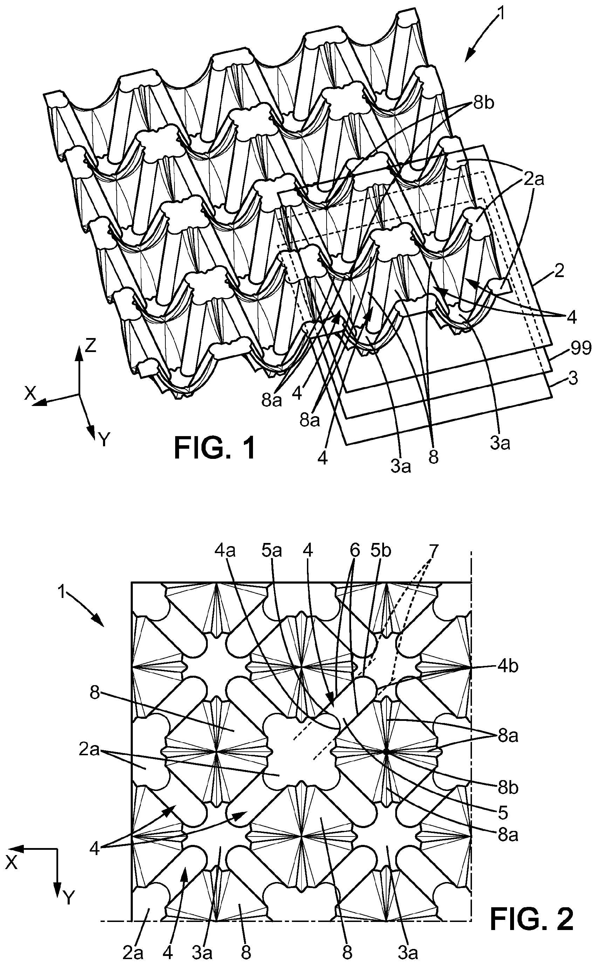

Les **figures 1 et 2** présentent une feuille **1** d'âme de matériau structural sandwich selon un premier mode de réalisation de la présente invention. Cette feuille **1** s'étend selon des directions d'extension **X** et **Y** et possède une face supérieure **2** ainsi qu'une face inférieure **3** situées de part et d'autre d'un plan médian **99.**

Les faces supérieure **2** et inférieure **3** sont opposées selon une direction d'épaisseur **Z,** perpendiculaire au plan d'extension formé par les directions d'extensions **X** et **Y.**

Les faces supérieures et inférieures peuvent être parallèles entre elles ainsi qu'avec le plan médian **99.**

Les faces supérieure **2** et inférieure **3** sont séparées par une distance d'épaisseur non-nulle, mesurée selon la direction d'épaisseur **Z.**

Les faces supérieure **2** et inférieure **3** sont ainsi distinctes.

Le plan médian **99** est situé à la moitié de la distance d'épaisseur séparant les faces supérieure **2** et inférieure **3.**

Au niveau de sa face supérieure **2,** la feuille **1** présente une pluralité de surfaces supérieures de collages **2a.**

Au niveau de sa face inférieure **3,** la feuille **1** présente une pluralité de surfaces inférieures de collages **3a.**

Les surfaces supérieures de collages **2a** peuvent être réparties périodiquement, de façon à former un réseau périodique, par exemple un réseau carré comme illustré sur les **figures 1 et 2****.**

De façon identique, les surfaces inférieures de collages **3a** peuvent être réparties périodiquement de façon à former un réseau périodique, par exemple un réseau carré comme illustré sur les **figures 1 et 2****.**

Les réseaux périodiques formés par les surfaces supérieures **2a** et inférieures **3a** de collage peuvent être agencés en quinconce, une surface supérieure de collage étant entourée de surfaces inférieures de collage et vis-et-versa.

Les surfaces supérieures et inférieures de collage peuvent par exemple être planes et posséder n'importe quelle forme.

Elles peuvent être percées ou pleines.

En variante, les surfaces supérieures et inférieures de collage peuvent posséder des parties rentrantes ou sortantes selon la direction d'épaisseur **Z.**

Les surfaces supérieures **2a** de collage peuvent être identiques entre elles.

De même, les surfaces inférieures de collage **3a** peuvent être identiques entre elles.

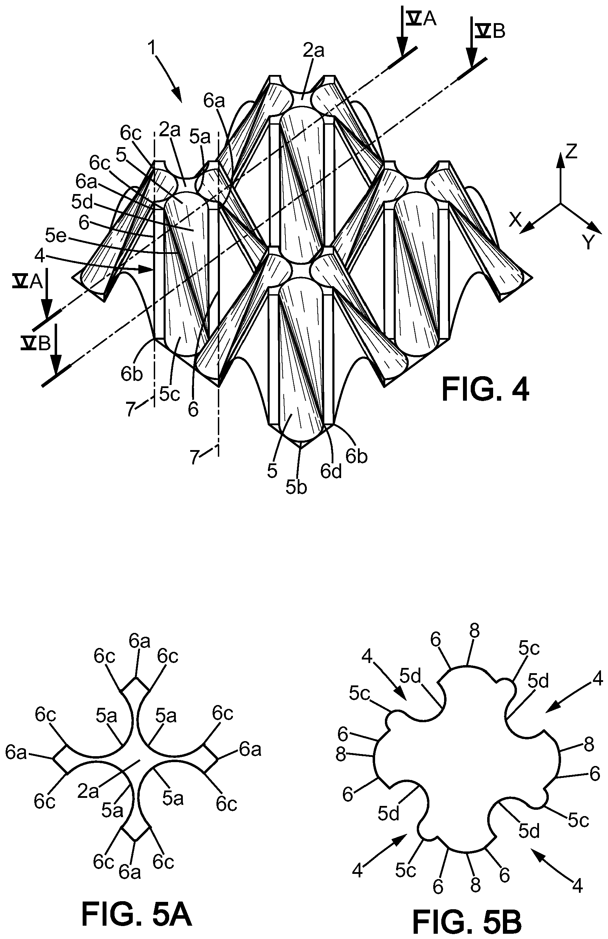

Les surfaces supérieures **2a** de collage et les surfaces inférieures de collage **3a** peuvent être identiques entre elles, comme détaillé ci-avant en relation avec les **figures 4, 5a, 5b****,** **6, 7a et 7b****.**

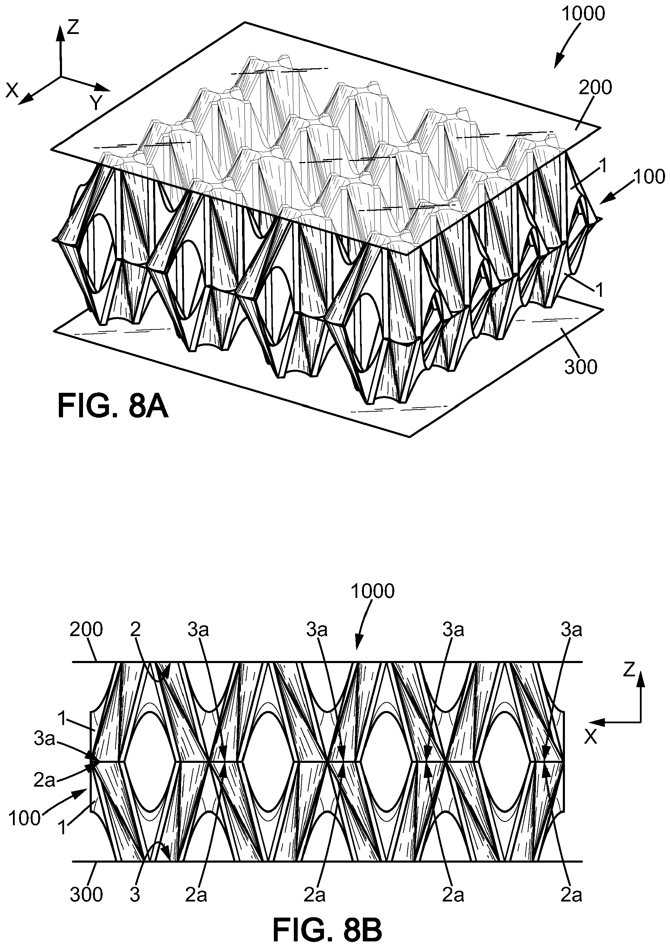

Ceci peut par exemple permettre d'offrir un comportement adhésif identique de la feuille avec des peaux externes **200** d'une âme de matériau structural sandwich **100** telle par exemple qu'illustrée **figures 8a et 8b** et détaillée ci-avant.

D'autres réseaux ainsi que d'autres formes pour les surfaces supérieures et inférieures de collage que les réseaux et surfaces illustrés sur les **figures 1 et 2** et décrits ci-dessus peuvent être envisagés comme indiqué ci-après.

La feuille **1** peut être réalisée dans un matériau comme un plastique, un métal, un alliage, un matériau composite ou une résine. L'épaisseur du matériau constituant la feuille **1** peut aller de 8 micromètres à 2 millimètres.

Comme indiqué sur les **figures 1 et 2****,** la feuille **1** comporte en outre un réseau tridimensionnel d'arêtes **4** séparées par des surfaces de liaison **5.**

Les arêtes **4** sont chacune définie par une paroi profilée non-plane **5** délimitée par une surface supérieure de collage, une surface inférieure de collage et deux droites parallèles **6** reliant ladite surface supérieure de collage à ladite surface inférieure de collage en suivant une direction d'arête **7.**

Par réseau tridimensionnel d'arêtes, on entend que l'ensemble des arêtes **4** comprend au moins trois arêtes **4** dont les directions d'arêtes **7** sont non coplanaires.

L'extrémité supérieure **4a** de chaque arête **4** est ainsi constituée par une surface supérieure de collage **2a,** et l'extrémité inférieure **4b** par une surface inférieure de collage **3a.**

Les droites parallèles **6** sont donc chacune reliée à l'une de leur extrémité à une surface supérieure de collage **2a** et à leur autre extrémité à une surface inférieure de collage **3a.**

Dans un mode de réalisation alternatif, les droites parallèles **6** peuvent être sensiblement parallèles, c'est-à-dire par exemple légèrement courbées ou légèrement inclinée l'une par rapport à l'autre.

Dans le mode de réalisation des **figures 1 et 2****,** la paroi profilée non-plane **5** des arêtes **4** possède la forme d'un demi-cylindre coupé selon l'un de ses plans d'extension.

D'autres formes pour les parois profilées non-plane **5** des arêtes **4** peuvent être envisagées comme détaillé ci-après.

Ainsi en particulier, les parois profilées non-plane **5** des arêtes **4** peuvent être rentrantes, saillantes ou comporter à la fois des parties rentrantes et des parties saillantes.

De façon avantageuse, les parois profilées non-planes **5** sont constituées uniquement de droites reliant les surfaces supérieures de collage **2a** les délimitant aux surfaces inférieures de collage **3a** les délimitant. Ceci permet d'augmenter encore la résistance mécanique de la structure.

Des surfaces de liaison **8** relient les arêtes **4** entre elles et avec les surfaces inférieures **3a** et supérieures **2a** de collage.

Les surfaces de liaison **8** sont avantageusement délimitées par au moins trois arêtes **4.** Ainsi, les surfaces de liaison présentent un poids minimal.

Dans le mode de réalisation des **figures 1 et 2****,** les surfaces de liaison **8** sont chacune délimitée par deux surfaces supérieures de collage **2a,** deux surfaces inférieures de collage **3a** et quatre arêtes **4,** lesdites arêtes reliant chacune l'une desdites deux surfaces supérieures de collage à l'une desdites deux surfaces inférieures de collage.

Les surfaces de liaison **8** sont avantageusement des surfaces minimales, c'est-à-dire que chacune d'entre elles possède une aire minimale tout en reliant les éléments qui la délimitent. Ceci permet de réduire encore davantage le poids de la feuille tout en conservant de bonnes caractéristiques mécaniques.

Ainsi les surfaces de liaison **8** peuvent avoir un profil en selle de cheval aussi appelé paraboloïde hyperbolique, c'est-à-dire qu'elles présentent une courbure négative.

En outre, le barycentre **8b** de chaque surface de liaison **8** peut avantageusement être situé au niveau du plan médian **99** parallèle au plan d'extension **XY** de la feuille **1** et situé à la moitié de la distance d'épaisseur séparant les faces supérieure **2** et inférieure **3.**

Les surfaces de liaison **8** peuvent présenter des rainures **8a,** par exemple des rainures profilées comme illustré sur les **figures 1 et 2****.**

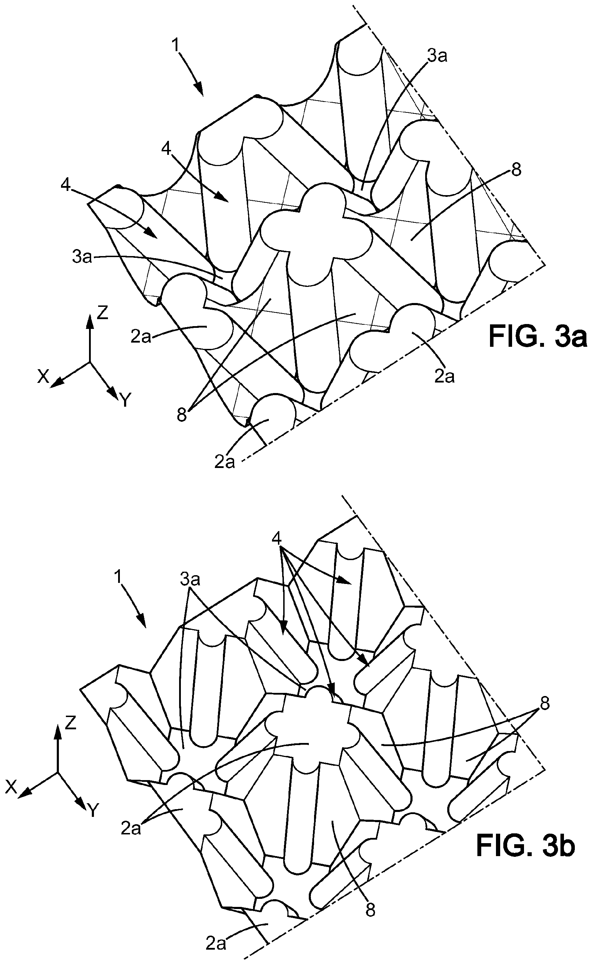

Comme illustré sur les **figures 3a et 3b****,** les surfaces de liaison **8** peuvent également être segmentées, c'est-à-dire constituées de facettes planes. Dans ce mode de réalisation, les surfaces de liaison **8** ne constituent plus des surfaces minimales mais en constitue une approximation segmentée.

Les surfaces de liaison **8** peuvent enfin être pleines ou percées d'ouverture afin d'alléger davantage la structure.

En particulier, l'ensemble ou une partie seulement des surfaces de liaison **8** peuvent être percées d'ouvertures.

Chaque ouverture peut être pratiquée sur une surface de liaison associée. Par « surface de liaison associée », on entend la surface de liaison dans laquelle est pratiquée l'ouverture en question.

Dans une réalisation possible, chaque ouverture peut être pratiquée sur une partie seulement de la surface de liaison associée. Ladite partie peut en particulier comprendre le barycentre de la surface de liaison associée.

Ladite partie peut en particulier s'étendre sur une portion de la surface de liaison associée dont l'aire est inférieure à la moitié de l'aire de la surface de liaison associée.

Dans une autre réalisation possible, chaque ouverture peut être pratiquée sur la majeure partie ou la totalité de la surface de liaison associée, en particulier, chaque ouverture peut s'étendre sur une portion de la surface de liaison associée dont l'aire est supérieure à la moitié de l'aire de la surface de liaison associée, en particulier supérieure au trois quarts de l'aire de la surface de liaison associée.

En référence aux **figures 4, 5a et 5b****,** les parois profilées non-planes **5** des arêtes **4** peuvent présenter une forme en « sinusoïde inclinée ».

Ainsi, une paroi profilée non-plane **5** d'une arête **4** peut avoir un profil supérieur **5a** au niveau de la surface supérieure de collage la délimitant, par exemple un profil en arc de cercle rentrant comme illustré sur la **figure 4****.**

La paroi profilée non-plane **5** peut avoir un profil inférieure **5b** au niveau de la surface inférieure de collage la délimitant, par exemple un profil en arc de cercle sortant comme illustré sur la **figure 4****.**

Les surfaces supérieures **2a** et inférieures **3a** de collage peuvent ainsi être identiques.

Ceci peut par exemple permettre d'offrir un comportement adhésif identique de la feuille avec des peaux externes **200** d'une âme de matériau structural sandwich **100** telle par exemple qu'illustrée **figures 8a et 8b** et détaillée ci-avant.

Entre le profil supérieur **5a** et le profil inférieur **5b,** la paroi profilée non-plane **5** peut présenter un profil formé de parties saillantes **5c** et de parties rentrantes **5d** se décalant progressivement le long de la direction d'arête **7** du côté de l'une des droites parallèles **6** comme illustré sur les **figures 5a et 5b****.**

Ainsi, les parois profilées non-planes **5** peuvent en particulier comporter au moins une droite inclinée **5e,** inclinée par rapport à la direction d'arête **7** et reliant sensiblement ou exactement l'extrémité supérieure **6a** de l'une des deux droites parallèles **6** à l'extrémité inférieure **6b** de l'autre des deux droites parallèles **6** délimitant l'arête **4.**

Comme représenté sur les **figures 4 et 5A****,** la droite inclinée **5e** peut relier par exemple un premier point **6c** de la surface supérieure de collage **2a** à un second point **6d** de la surface inférieure de collage **3a,** le premier point **6c** étant à proximité de l'extrémité supérieure **6a,** et le second point **6d** étant à proximité de l'extrémité inférieure **6b.**

Lesdites extrémités supérieures **6a** et inférieures **6b** desdites droites parallèles **6** sont entendues comme étant les intersections entre lesdites droites parallèles **6** et respectivement la surface supérieure de collage **2a** et la surface inférieure de collage **3a** délimitant l'arête **4.**

Dans ce mode de réalisation, les arêtes **4** sont en outre jointives à leurs extrémités supérieures **4a** et inférieures **4b,** c'est-à-dire que les extrémités supérieures **6a** de deux droites parallèles **6** délimitant respectivement deux arêtes **4** distinctes et reliées à une même surface supérieure de collage **2a** sont confondues.

De façon identique, les extrémités inférieures **6b** de deux droites parallèles **6** délimitant respectivement deux arêtes **4** distinctes et reliées à une même surface inférieure de collage **3a** sont confondues.

La périphérie des surfaces de collages supérieures et inférieures est alors constituée uniquement par des extrémités respectivement supérieures **4a** et inférieures **4b** d'arêtes **4.**

Dans ce mode de réalisation, chaque arête **4** présente ainsi un auto-contreventement réalisé par les droites inclinées **5e** et les arêtes adjacentes **4.**

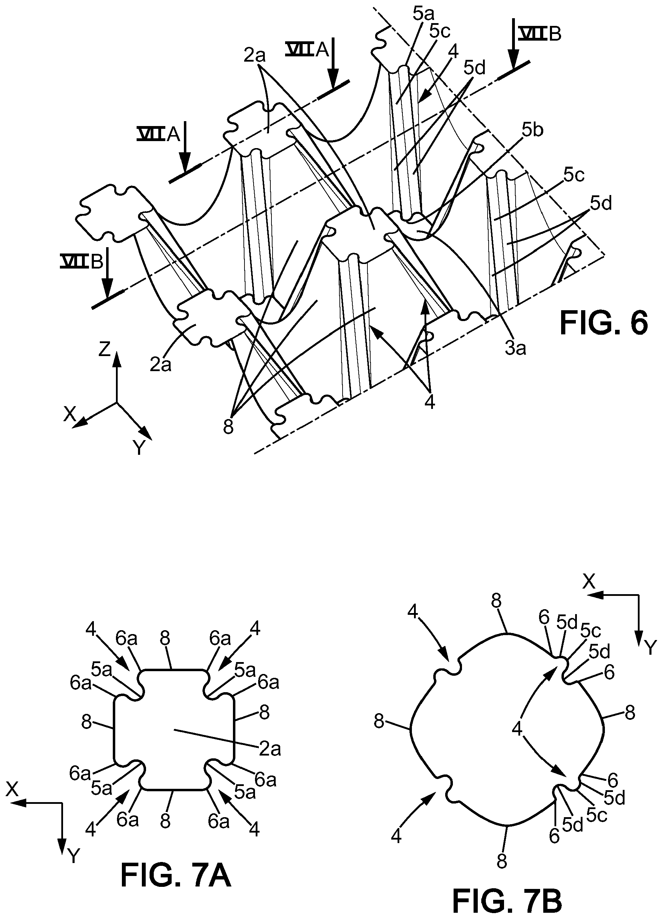

En variante, le profil de la paroi profilée non-plane **5** peut être plus complexe et ladite paroi profilée peut présenter des profils supérieur **5a** et inférieur **5b** possédant plusieurs parties rentrantes comme illustré sur les **figures 6, 7a, et 7b****.**

En référence aux **figures 8a et 8b****,** une âme de matériau structural sandwich **100** peut être réalisée par assemblage de deux feuilles **1** selon la direction d'épaisseur **Z** desdites feuilles **1,** par exemple au niveau respectivement des surfaces supérieures **2a** et inférieures **3a** de collage desdites feuilles **1.**

En variante, d'autres feuilles **1** peuvent être fixées de façon identiques audit assemblage de deux feuilles **1** de façon à constituer une âme de matériau structural sandwich **100** d'épaisseur arbitraire.

Enfin, toujours en référence aux **figures 8a et 8b****,** un matériau structural sandwich **1000** peut être obtenu en superposant, sur au moins l'une des faces supérieure ou inférieure d'une âme **100,** une peau externe **200,** par exemple une peau externe supérieure **200** et une peau externe inférieure **300.** Lesdites peaux sont par exemple formées en matière composite d'un plastique renforcé par des fibres.

Il est également possible d'intercaler des peaux **200** entre une ou plusieurs des feuilles constituant l'âme de matériau structural sandwich **100,** ceci permet par exemple de renforcer la résistance mécanique de ladite âme **100.**

## Revendications

1. Feuille d'âme de matériau structural sandwich s'étendant sensiblement selon un plan d'extension (XY) et présentant une face supérieure (2) et une face inférieure (3) opposées selon une direction d'épaisseur (Z) perpendiculaire au plan d'extension,
la feuille étant munie d'une pluralité de surfaces supérieures de collage (2a) au niveau de sa face supérieure ainsi que d'une pluralité de surfaces inférieures de collage (3a) au niveau de sa face inférieure,
la feuille étant **caractérisée en ce qu'**elle comprend un réseau tridimensionnel d'arêtes (4) séparées par des surfaces de liaisons (8),
**en ce que** chaque arête est définie par une paroi profilée non-plane (5) délimitée par
une surface supérieure de collage parmi la pluralité de surfaces supérieures de collage,
une surface inférieure de collage parmi la pluralité de surfaces inférieures de collage, et
deux droites sensiblement parallèles (6) reliant ladite surface supérieure de collage à ladite surface inférieure de collage en suivant une direction d'arête (7),
**et en ce que** chaque surface de liaison (8) est délimitée par au moins trois arêtes et a un barycentre (8b) localisé sensiblement au niveau d'un plan médian (99) parallèle au plan d'extension (XY) de la feuille et situé à la moitié d'une distance d'épaisseur séparant les faces supérieure (2) et inférieure (3), ladite distance étant considérée selon la direction d'épaisseur (Z).

2. Feuille selon la revendication 1, dans laquelle les surfaces supérieures (2a) et inférieures (3a) de collages sont réparties périodiquement.

3. Feuille selon l'une quelconque des revendications 1 à 2, dans laquelle la pluralité de surfaces supérieures de collage (2a) et la pluralité de surfaces inférieures de collages (3a) sont agencées en quinconce selon le plan d'extension (XY).

4. Feuille selon l'une quelconque des revendications 1 à 3, dans laquelle chaque surface de liaison (8) est délimitée par au moins quatre arêtes (7), deux surfaces de collage inférieures (2a) et deux surfaces de collage supérieures (3a).

5. Feuille selon l'une quelconque des revendications 1 à 4, dans laquelle les surfaces de liaison (8) sont des surfaces minimales.

6. Feuille selon l'une quelconque des revendications 1 à 5, dans laquelle les surfaces de liaison (8) sont des surfaces minimales segmentées ou pourvues de rainures (8a).

7. Feuille selon l'une quelconque des revendications 1 à 6, dans laquelle, des surfaces de liaison (8) sont percées d'ouvertures.

8. Feuille selon l'une quelconque des revendications 1 à 7, dans laquelle les surfaces supérieures (2a) et inférieures (3a) de collage sont identiques.

9. Feuille selon l'une quelconque des revendications 1 à 8, dans laquelle, pour au moins une arête (4), les deux droites parallèles (6) délimitant ladite arête sont non-confondues.

10. Feuille selon l'une quelconque des revendications 1 à 9, dans laquelle, chaque paroi profilée non-plane (5) d'arêtes (4) est constituée uniquement par des droites reliant ladite surface supérieure de collage (2a) la délimitant à ladite surface inférieure de collage (3a) la délimitant.

11. Âme de matériau structural sandwich (100) comportant au moins une feuille (1) selon l'une quelconque des revendications 1 à 10.

12. Matériau structural sandwich (1000) comportant une âme (100) selon la revendication 11.

## Patentansprüche

1. Kernschicht eines Sandwich-Baumaterials, die sich im Wesentlichen in einer Erstreckungsebene (XY) erstreckt und eine obere Fläche (2) und eine untere Fläche (3) aufweist, die sich in einer zur Erstreckungsebene senkrechten Dickenrichtung (Z) gegenüberliegen,
wobei die Schicht an ihrer oberen Fläche mit mehreren oberen Klebeflächen (2a) sowie an ihrer unteren Fläche mit mehreren unteren Klebeflächen (3a) versehen ist,
wobei die Schicht **dadurch gekennzeichnet ist, dass** sie ein dreidimensionales Netzwerk von Graten (4) aufweist, die durch Verbindungsflächen (8) getrennt sind,
dadurch, dass jeder Grat durch eine nichtebene profilierte Wand (5) definiert ist, die begrenzt ist durch
eine obere Klebefläche der mehreren oberen Klebeflächen,
eine untere Klebefläche der mehreren unteren Klebeflächen und
zwei im Wesentlichen parallele gerade Linien (6), die die obere Klebefläche mit der unteren Klebefläche einer Gratrichtung (7) folgend verbinden,
und dadurch, dass jede Verbindungsfläche (8) durch mindestens drei Grate begrenzt ist und einen Schwerpunkt (8b) hat, der sich im Wesentlichen in Höhe einer Mittelebene (99) befindet, die parallel zur Erstreckungsebene (XY) der Schicht ist und auf der Hälfte eines Dickenabstands, der die obere (2) und untere (3) Fläche trennt, angeordnet ist, wobei der Abstand in der Dickenrichtung (Z) zu betrachten ist.

2. Schicht nach Anspruch 1, in welcher die oberen (2a) und unteren (3a) Klebeflächen periodisch verteilt sind.

3. Schicht nach einem der Ansprüche 1 bis 2, in welcher die mehreren oberen Klebeflächen (2a) und die mehreren unteren Klebeflächen (3a) in der Erstreckungsebene (XY) gegeneinander versetzt angeordnet sind.

4. Schicht nach einem der Ansprüche 1 bis 3, in welcher jede Verbindungsfläche (8) durch mindestens vier Grate (7), zwei untere Klebeflächen (2a) und zwei obere Klebeflächen (3a) begrenzt ist.

5. Schicht nach einem der Ansprüche 1 bis 4, in welcher die Verbindungsflächen (8) Minimalflächen sind.

6. Schicht nach einem der Ansprüche 1 bis 5, in welcher die Verbindungsflächen (8) Minimalflächen sind, die segmentiert oder mit Rillen (8a) versehen sind.

7. Schicht nach einem der Ansprüche 1 bis 6, in welcher Verbindungsflächen (8) mit Öffnungen durchstochen sind.

8. Schicht nach einem der Ansprüche 1 bis 7, in welcher die oberen (2a) und unteren (3a) Klebeflächen gleich sind.

9. Schicht nach einem der Ansprüche 1 bis 8, in welcher für mindestens einen Grat (4) die zwei parallelen geraden Linien (6), die den Grat begrenzen, sich nicht vereinigen.

10. Schicht nach einem der Ansprüche 1 bis 9, in welcher jede nichtebene profilierte Wand (5) von Graten (4) einzig und allein aus geraden Linien gebildet ist, die die sie begrenzende obere Klebefläche (2a) mit der sie begrenzenden unteren Klebefläche (3a) verbinden.

11. Kern eines Sandwich-Baumaterials (100), der mindestens eine Schicht (1) nach einem der Ansprüche 1 bis 10 aufweist.

12. Sandwich-Baumaterial (1000) aufweisend einen Kern (100) nach Anspruch 11.

## Claims

1. Structural material sandwich core sheet extending substantially in an extension plane (XY) and having a top face (2) and a bottom face (3) that are opposite in a direction of thickness (Z) perpendicular to the extension plane,
the sheet being provided with a plurality of top bonding surfaces (2a) on the top face thereof as well as a plurality of bottom bonding surfaces (3a) on the bottom face thereof,
the sheet being **characterised in that** it comprises a three-dimensional network of edges (4) separated by connecting surfaces (8),
and **in that** each edge is defined by a non-planar, profiled wall (5) bounded by
one top bonding surface of the plurality of top bonding surfaces,
one bottom bonding surface of the plurality of bottom bonding surfaces, and
two substantially parallel straight lines (6) connecting said top bonding surface to said bottom bonding surface following an edge direction (7),
**and in that** each connecting surface (8) is bounded by at least three edges and has a barycentre (8b) located substantially at the level of a median plane (99) parallel with the extension plane (XY) of the sheet and disposed at half a thickness distance separating the top (2) and bottom faces (3), said distance being considered in the thickness direction (Z).

2. Sheet as claimed in claim 1, wherein the top (2a)
and bottom bonding surfaces (3a) are periodically distributed.

3. Sheet as claimed in any one of claims 1 to 2, wherein the plurality of top bonding surfaces (2a) and the plurality of bottom bonding surfaces (3a) are arranged in staggered rows in the extension plane (XY).

4. Sheet as claimed in any one of claims 1 to 3, wherein each connecting surface (8) is bounded by at least four edges (7), two bottom bonding surfaces (2a) and two top bonding surfaces (3a).

5. Sheet as claimed in any one of claims 1 to 4, wherein the connecting surfaces (8) are minimal surfaces.

6. Sheet as claimed in any one of claims 1 to 5, wherein the connecting surfaces (8) are minimal surfaces which are segmented or provided with grooves (8a).

7. Sheet as claimed in any one of claims 1 to 6, wherein the connecting surfaces (8) are perforated with openings.

8. Sheet as claimed in any one of claims 1 to 7, wherein the top (2a) and bottom bonding surfaces (3a) are identical.

9. Sheet as claimed in any one of claims 1 to 8, wherein for at least one edge (4), the two parallel straight lines (6) bounding said edge are not coincident.

10. Sheet as claimed in any one of claims 1 to 9, wherein each non-planar, profiled wall (5) of edges (4) is formed solely by straight lines connecting said top bonding surface (2a) bounding it to said bottom bonding surface (3a) bounding it.

11. Structural material sandwich core (100) comprising at least one sheet (1) as claimed in any one of claims 1 to 10.

12. Structural material sandwich (1000) comprising a core (100) as claimed in claim 11.
